# EUROPÄISCHE PATENTSCHRIFT

(11) **EP 0 863 850 B1**
(45) Veröffentlichungstag und Bekanntmachung des Hinweises auf die Patenterteilung: **06.02.2002**
(21) Anmeldenummer: 96923814.6
(22) Anmeldetag: 07.07.1996
(51) Int. Cl.: C02F 5/10

(54) **REINIGER FÜR TRINKWASSERANLAGEN, VERFAHREN ZUM REINIGEN UND VERWENDUNG**
DRINKING WATER SYSTEM CLEANER, CLEANING METHOD AND USE THEREOF
NETTOYANT POUR INSTALLATIONS D'EAU POTABLE, PROCEDE DE NETTOYAGE ET UTILISATION

(30) Priorität: 30.11.1995 DE 19544765
(43) Veröffentlichungstag der Anmeldung: 16.09.1998
(73) Patentinhaber: Wessollek, Heimo, D-91217 Hersbruck (DE)
(72) Erfinder: Wessollek, Heimo, D-91217 Hersbruck (DE)
(74) Vertreter: Neidl-Stippler, Cornelia, Dr.
(86) Internationale Anmeldenummer: DE9601213
(87) Internationale Veröffentlichungsnummer: WO9719897

(56) Entgegenhaltungen:
- EP-A- 0 456 271
- EP-A- 0 456 272
- DE-A- 1 813 717
- DE-A- 4 316 456
- DE-A- 4 325 312
- DE-U- 9 418 098
- RÖMPP LEXIKON UMWELT, Hulpke, Thieme Verlag, 1993, Seiten 722-726
- RÖMPP CHEMIE LEXIKON, Falbe, Thieme Verlag, 1992, Seite 4154

## Beschreibung

Die Erfindung betrifft Reiniger für Trinkwasseranlagen, die Ablagerungen wie Kalk, Fett, Eisen oder manganhaltige Verockerungen aufweisen, mit einem Gehalt an Citronensäure, Verfahren zum Reinigen von Trinkwasseranlagen sowie ihre Verwendung.

Wasserführende Anlagen, insbesondere Brunnen od. dgl. weisen nach längerem Betrieb Verkalkungen, Verockerungen und andere Ablagerungen auf, die die Leistungsfähigkeit der Wasserführung beeinträchtigen und auch für Verkeimung einen guten Nährboden bzw. gute Ansiedelungsmöglichkeit bieten. Daher ist es notwendig, insbesondere wasserführende Anlagen, deren Wasser dem menschlichen/tierischen Genuß dient, wie Brunnen, Heißwassergeräte, Tiertränken u. dgl. in regelmäßigen Abständen zu pflegen - d.h. die Ablagerungen mechanisch/physikalisch zu entfernen und/oder chemisch aufzulösen.

Insbesondere unterliegen Brunnen zur Entnahme von Grundwasser einer natürlichen Alterung und zeigen mit zunehmender Betriebszeit ein allmähliches Nachlassen der Leistung. Die chemische Verockerung ist eine Folge des Sauerstoffeintrages in das Grundwasser. Dabei werden gelöste Fe²⁺-Ionen zu Fe³⁺-Ionen, die unlösliche Verbindungen bilden, oxidiert. Die biologische Verockerung beruht auf der Fähigkeit von im Grundwasser lebenden Bakterien, zweiwertiges Eisen und Mangan im Stoffwechsel zu oxidieren und als Belag auszuscheiden. Dabei dient die bei der Oxidation der Metallionen freiwerdende Energie den Bakterien zur Aufrechterhaltung des Stoffwechsels. Somit wird auf ganz natürliche Weise bei einem Brunnen die Filterschlitze der Verrohrung, die Porenräume der Filterkiesschüttung und der weiteren Umgebungsgeologie verockert und zugesetzt.

Das gleiche gilt - wenn auch in unterschiedlichem Ausmaß, für andere wasserführende Systeme, wie Heißwassergeräte, die Wasser für den menschlichen Verzehr enthalten, Schwimmbäder und die dazugehörigen technischen Anlagen etc.

Die sog. Brunnenregenerierung hat nun den Zweck, die Brunnen- und Grundwasserhydraulik so weit wie möglich wiederherzustellen, wobei die Brunnenbestandteile geschont und die Geologie erhalten werden soll.

Zu diesem Zweck müssen die Inhaltsstoffe eines Regeneriermittels in der Lage sein, die heterogenen Beläge bzw. Verockerungen mit organischen und anorganischen Bestandteilen innerhalb eines vertretbaren Zeitraums (bspw. 12 - 24 Std.) zu lösen oder zumindest wieder für durchstromendes Wasser durchlässig zu machen. Dabei darf es während des Lösevorganges nicht zu einer Schädigung des hydrogeologischen Umfeldes durch Zusetzen der Kapillarwege durch Abbauprodukte der Pflegebehandlung kommen.

Häufig wird zur Lösung derartiger Ablagerungen eine anorganische Säure, insbesondere HCl, verwendet (DE-OS 35 04 394) oder auch gemeinsam mit Perverbindungen (DE-OS 35 04 394) eingesetzt. Diese Mittel waren insofern nachteilig, da sie zunächst agressiv die Brunnenverrohrung, Ventile etc. angegriffen, aber auch bei vielen Gesteinsarten, insbesondere Glimmern und Kalken zu chemischen Umwandlungen führten, die zur vollständigen Zusetzung des Aquifers und damit zur Unbrauchbarkeit des Brunnens wegen Zusetzung durch die Abbauprodukte der Mineralsäure führten.

Dies soll an einem üblichen Bodenbestandteil, dem Feldspat, erläutert werden. Bekannt ist die Zersetzung von Feldspat durch Säuren, in der Natur Kohlensäure, die zur Bildung von Schichtsilikaten, Kieselsäure, und Kaliuncarbonat fthrt.

KAlSi₃O₈+ CO₂ + H₂O = Al₂(OH)₄Si₅ + 4 SiO₂ + K₂CO₃

Diese Reaktion ist bei schwachen Säuren, wie Kohlensäure, Ascorbinsäure, Citronensäure langsam und die gebildeten Schichtsilikate setzen üblicherweise unter den Bedingungen der Brunnenregeneration die Wasserwege nicht zu.

Beim Einsatz starker Mineral-Säuren, wie HCl, ist bekannt, daß sich die Feldspäte unter Bildung von Aluminiumsilikat und Kieselsäure zersetzen, die als feine Kristalle abgeschieden werden und selbst kleinste Poren zusetzen.

KAlSi₃O₈ + 4 HCl = K⁺ + Al³⁺ + 3 SiO₂ + 4 Cl⁻

Weiterhin werden die an Tonminerale adsorptiv gebundenen Kationen (Ca²⁺, Mg²⁺, K⁺) ausgetauscht und ausgewaschen. Die Ladungsstellen der Tonminerale werden durch Aluminiumhydroxy-Kationen besetzt. Die wichtige Kationenaustauscher-Kapazität der Tonminerale wird dadurch verringert. Es besteht somit auch noch die Gefahr, daß die Mobilität für Schwermetallionen erhöht wird, was wiederum zu einer Belastung des Brunnenwassers durch diese Schwermetalle führen kann.

Die durch starke Säuren in der Brunnenumgebung hervorgerufenen Zersetzungs-Produkte sind häufig amorph, nun nicht mehr säurelöslich und führen zu einer irreversiblen Brunnendegeneration. Ahnliche Reaktionen spielen sich bei der Zersetzung von Kalkstein, Dolomit u. dgl. ab, wobei die nach der Lösung der ursprunglichen Gesteins-/Mineralienarten ausfallenden Salze dann die wasserleitenden Wege irreversibel zusetzen. Dadurch entstehen dann die bekannten "salzsäuregeschädigten" Brunnen.

Es wurde auch bereits versucht, organische Säuren mit weniger agressivem pH-Wert, die dennoch aufgrund ihrer Metall-Komplexbildungseigenschaften gut Metallverbindungen, eingeschlossen Erdalkaliverbindungen, lösen konnen, einzusetzen, die dazu möglichst ungiftig sind.

Zu diesem Zweck ist es aus der DE-A-40 15 201 bzw. der parallelen EP-B-456271 bekannt geworden, Citronensäure und Ascorbinsäure gemeinsam zur Lösung von Kalk, Eisen oder manganhaltiger Ablagerungen einzusetzen.

Dieses Mittel war bereits hinsichtlich der Regeneration der Brunnenleistung sehr erfolgreich - allerdings war das Problem der Verkeimung in manchen Fällen noch nicht völlig zufriedenstellend gelöst, da Ascorbinsäure von einigen Mikroorganismen gut verstoffwechselt wird.

Es zeigte sich, daß bei den Lösungsvorgängen manchmal aus den Ablagerungen und Belägen Biomasse freigelegt wird, die nicht löslich ist. Diese bildet ein gutes Nährstoffangebot für Mikroorganismen und kann daher eine Grundlage für eine neue Verkeimung bilden. Im Rahmen einer wissenschaftlichen Studie des Hygiene-Insituts der Universität Erlangen-Nürnberg "Natürliche Brunnenalterung" wurde gefunden, daß die aus einer Reihe von Brunnenbelägen isolierten Zellbestandteile einen guten Nährboden für typische im Grundwasser lebende Mikroorganismen darstellen.

Zur Vermeidung des Wachstums diese Mikroorganismen wurde insbesondere für leicht zugängliche Systeme, wie Schwimmbäder, Autowaschanlagen etc. sehr erfolgreich der Zusatz von Lebensmittelkonservierungsstoffen, wie Benzoesäure etc. empfohlen, die allerdings häufig den Nachteil geringer Löslichkeit in Wasser hatten, sodaß bei die bei größeren Regenerationen notwendige höhere Konzentration nur schwierig erreicht werden konnte.

Ferner wurde auch versucht, mit Citronensäure alleine in Kombination mit Peroxiden und Lebensmittelkonservierungsstoffen dieses Problem zu lösen - EP B 456 272. Aber auch dort zeigte sich, daß die Wirkung des Mittels noch verbesserungsfähig ist -insbesondere hinsichtlich der Lösungseigenschaften von festsitzenden Belägen, die nach einer Erst-Lösung der leicht säurelöslichen Beläge manchmal schwerlösliche, schlecht durchdringbare Krusten bilden.

Aus der EP-A-0 456 271 ist ebenfalls ein Ascorbinsäure haltiger Reiniger bekannt.

Es ist somit Aufgabe der Erfindung, ein Mittel bereitzustellen, das eine gute Wirksamkeit gegenüber Nachverkeimung besitzt, gute Lösungseigenschaften für Carbonate und Oxide von 2- und 3-wertigen Metallen besitzt und zumindest für Menschen und Säugetiere in den verwendeten Mengen nicht toxisch ist.

Die Aufgabe wird erfindungsgemäß gelöst durch einen Reiniger, gemäß Anspruch 1. Vorteilhafte Weiterbildungen ergeben sich aus den abhängigen Ansprüchen.

Dadurch, daß nun in den verwendeten Mengen untoxische Tenside eingesetzt werden, kann die Eindringfähigkeit des erfindungsgemäßen Reinigers durch die Herabsetzung der Oberflächenspannung stark verbessert werden, sodaß auch ein Eindringen des Mittels in kleine Poren und eine weitere Lösung möglich ist, die sonst durch die Oberflächenspannung des Wassers vermieden wird. Die Tenside umhüllen ferner Festteilchen und machen sie in Wasser aufgrund der hydrophilen Gruppen der Tenside transportierbar, sodaß diese leicht aus dem Aquifer herausgespült werden können. Die Belagsauflösegeschwindigkeit ändert sich durch den Zusatz von Tensiden drastisch, was zu erheblichen Einsparungen an Reinigungsmittel führt, wobei b ei hoher Reaktivität des Materials eine geringere Agressivität (Brunnenverrohrung etc) und Korrosivität erreicht wird. Ferner ist das Reinigungsmittel nichttoxisch und physiologisch unbedenklich sowie nicht eutrophierend.

Prinzipiell eignen sich alle für den Menschen in den verwendeten Mengen nichttoxischen Tenside, ausgewählt ist aus der Gruppe bestehend aus in der verwendeten Menge untoxischen anionischen und nichtionischen Tensiden, Seifen, Fettsäure-Aminocarbonsäurekondensate, Alkylbenzolsulfonate, Ligninsulfonate, Alkylsulfonate, Fettsäureestern, sulfatierten Fettsäureglyceriden, Betaine, Sulfobetaine, Saponine, Fettsäureester von Polyalkoholen, Oxyäthylierte Fettsäuren etc.

Besonders vorteilhaft ist unter anderem Natriumdodecylsulfonat und Natriumlaurylsulfat.

Das Lebensmittelkonservierungsmittel kann vorteilhafterweise ausgewählt sein aus der Gruppe bestehend aus Sorbinsäure, Benzoesäure, p-Hydroxybenzoeäure, Ameisensäure und Propionsäure sowie deren Abkömmlingen, eingeschlossen Salze und Estern derselben.

Es ist besonders vorteilhaft, wenn der Lebensmittelkonservierungsstoff Sorbinsäure und/oder Benzoesäure bzw. deren Salze sind.

Es kann sinnvoll sein, daß der Reiniger zusätzlich ein oder mehrere von Materialien ausgewählt aus der Gruppe bestehend von lebensmittelrechtlich unbedenklichen Stabilisatoren, Trocknungsmittel, Säuerungsmittel, Korrosionsinhibitoren, Emulgatoren, Sprengmittel und/oder Tenside enthält.

Zur Vermeidung der Nachverkeimung hat es sich als gut herausgestellt, wenn der Reiniger für wasserführende Anlagen, mindestens ein wasserlösliches Silbersalz aufweist, das die Nachverkeimung der Anlage verhindert. Der Gehalt an Silbersalzen beträgt vorteilhafterweise zwischen 0,2 und 9,09 Gew.% des Reinigers als Trockenmasse.

Um das Lösungsverhalten weiter günstig zu beeeinflussen, kann es sinnvoll sein, MgCl2 einzusetzen, das durch Ionenaustausch mit anderen zweiwertigen Salzen die Lösung der Ablagerungen zweiwertiger Ionen fördert.

Das erfindungsgemäße Verfahren zum Reinigen von Trinkwasseranlagen beinhaltet, daß eine Reinigerlösung in Wasser aus der Zusammensetzung nach einem der vorangehenden Ansprüche in die Trinkwasseranlage oder den Brunnen oder dergleichen eingebracht und nach einer Einwirkzeit daraus entfernt wird.

Dadurch, daß nun Citronensäure mit ihrer günstigen Lösungseigenschaften gemeinsam mit Silberverbindungen, wie -salzen, die im Aquifer das Wachstum von Keimen, insbesondere von Mangan- und Eisenbakterien verhindern, eingesetzt werden, kann nun bei einer überraschend guten Reinigungswirkung auch die Nachverkeimung unter den zulässigen Grenzwert gemäß der Trinkwasserverordnung (max. 100 KBE/100 ml) herabgesetzt werden.

Es wird angenommen, daß Silber im Aquifer als unlösliche Verbindung - bspw. als Silberoxid/hydroxid oder als Salz ausfällt, wobei es dort, wo es ausfällt, desinfizierende/bakterienwachstumshemmende Eigenschaften entfaltet. Da Silber im Gegensatz zu Lebensmittelkonservierungsstoffen oder auch Ascorbin- oder Citronensäure - mit der Zeit nicht biologisch abgebaut wird, sondern an seinem Einsatzort verbleibt - für den Menschen allerdings nicht toxisch ist - kann eine verblüffende Langzeitwirkung gegen Verkeimung erzielt werden. Ferner wird angenommen, daß die bisher häufig verwendete Ascorbinsäure zwar ein hervorragendes Lösungspotential für Beläge aufweist, aber für manche Mikroorganismen eine gunstige Nahrungsquelle darzustellen scheint, sodaß auch ihr Weglassen in bestimmten Fällen, bei denen derartige Mikroorganismen beteiligt sind, gegenüber bekannten Lösungen zu einer geringeren Verkeimung zu führen scheint.

Es ist auch möglich, dem Reiniger einen Gehalt an einem Lebensmittelkonservierungsstoff zuzumischen. Dafür eignen sich Lebensmittelkonservierungsstoffe, wie die ausgewählt aus der Gruppe bestehend aus Benzoesäure, Acetylsalicylsäure, Sorbinsäure, Ameisensäure, Bernsteinsäure, Apfelsäure, Ascorbinsäure, deren Abkömmlinge sowie Salze und Mischungen derselben.

Es kann vorteilhaft sein, wenn im Reiniger der Gehalt an Zitronensäure zwischen 90 und 99,8 % des Reinigers beträgt und der Gehalt an Silberverbindungen zwischen 0,2 und 9,09 Gew.% des Reinigers als Trockenmasse beträgt.

Ein erfindungsgemäßes Verfahren zur Reinigung von wasserführenden Anlagen beinhaltet das Einbringen des Reinigers nach einem der vorangehenden Ansprüche in trockener Form oder in konzentrierter wässriger Lösung mit einem Gehalt an ca 0,5 - 30 g Reiniger auf 1 1 Wasser, Einwirkenlassen desselben und Abpumpen der im Aquifer befindlichen Lösung.

Es ist günstig, wenn die Lösung des Reinigers einen sauren pH-Wert, bevorzugt zwischen etwa 2 und etwa 6, aufweist.

Das Mittel läßt sich zur Reinigung und Pflege von wasserführenden Anlagen wie Schwimmbädern und Teichen, eingeschlossen Fischteichen und anderen Naturteichen, künstlichen und natürlichen Brunnen, Wasserleitungssystemen, wie Wasserleitungsanlagen, Heizanlagen, Klimaanlagen, Brauchwasseranlagen; zur Behandlung von wasserhaltigen Materialien, wie von Abfällen zur Abfallhygiene und zur Entkalkung von Küchengeräten, wie Kaffeemaschinen, Heißwassergeräten, einsetzen.

Die Lösekapazität des Reinigers beträgt etwa 100 g Reiniger für 112 g Belag, als bevorzugte Arbeitslösungen werden für die Brunnenbeläge 12 g Reiniger / 1 l Wasser im Brunnen bzw. bei Leitungen, Heißwasserbereitern etc. mit überwiegend kalkhaltigen Belägen 20 g Reiniger / 1 l Wasser eingesetzt.

Nachfolgend wird die Erfindung anhand der nachfolgenden Beschreibung sowie der Zeichnung und anhand der begleitenden Beispiele näher erläutert, auf die der Erfindungsgedanke aber keineswegs eingeschränkt ist. Dabei zeigt:
- Fig. 1: eine Versuchsanordnung zur Untersuchung von Brunnenorganismen,
- Fig. 2: eine graphische Darstellung des Keimwachstums bei verschiedenen Konzentrationen des Reinigers bei 37°C Bebrütung, der 96h bei 22°C in der Flasche belassen wurde,
- Fig. 3: eine graphische Darstellung des Keimwachstums bei ver schiedenen Konzentrationen des Reinigers bei 37°C Bebrütung, der 96h bei 9°C in der Flasche belassen wurde
- Fig. 4: eine graphische Darstellung des Keimwachstums bei verschiedenen Konzentrationen des Reinigers bei 22°C Bebrütung, der 96h bei 22°C in der Flasche belassen wurde
- Fig. 5:: eine graphische Darstellung des Keimwachstums bei verschiedenen Konzentrationen des Reinigers bei 22°C Bebrütung, der 96h bei 9°C in der Flasche belassen wurde

### Beispiel 1

### Brunnenregeneration

12 g einer Mischung von 0,2 Gew.-Teilen Silbernitrat und 99,8 Gew.-Teilen Citronensäure auf 1 Liter wurden als Lösung in einen Brunnenabschnitt, der vorher mechanisch vorgereinigt und unter- und oberhalb abgesperrt worden war, eingebracht und 24 Std. darin belassen. Danach wurde klargepumpt. Dieses Verfahren wurde abschnittsweise für die gesamte offene Filterrohrstrecke mit anstehenden Filterkies fortgesetzt. Es wurde festgestellt, daß die ursprüngliche Brunnenleistung wiederhergestellt war. Bei der üblichen Prüfung auf NachVerkeimung konnten keine Keime gefunden werden.

### Beispiel 2:

### Schwimmbadpflege

24 g einer Mischung von 5g Citronensäure und 0,2 g AgNO₃ pro 1000 1 Schwimmbad sowie 0,025 ml 35%-iges H₂O₂, 0,2 g Sorbinsäure und 2 g Na-Benzoat wurden in ein Schwimmbad eingebracht und die Keimwerte gemessen. Die biologischen Werte blieben, verglichen mit dem Einsatz von Ozon oder auch Chlor, stabil und das so behandelte Wasser übte keine Hautreizung aus. Auch gegenüber dem Einsatz einer Mischung von Ascorbin- und Citronensäure zeigte sich eine stark verbesserte Wiederverkeimungsverhinderung.

### Beispiel 3:

### Abfallhygiene

Ein biologische Abfälle aufweisendes Abfallgefäß mit 20 1 Inhalt wurde täglich mit einer Lösung aus 10 g Citronensäure, 0,05 g Silbernitrat, 0,2 g Sorbinsäure und 2 g Natriumbenzoat in 100 ml Wasser aus einer Sprühflasche besprüht. Das Auftreten von Schimmel und die damit und durch andere biologische Zersetzungsprozesse verbundenen Geruchsbelästigung und Gesundheitsgefährdung konnte verhindert werden.

Dieser Einsatz eignet sich insbesondere für Allergiker oder aber auch Abfälle, die in relativ großen zeitlichen Abständen entsorgt werden - in manchen Gemeinden werden die sog. "Biotonnen" nur in zweiwöchentlichem Abstand geleert und bilden sonst eine Quelle für gesundheitsgefährdende Organismen, wie Pilze u. dgl. oder locken auch Schädlinge durch den Verwesungsgeruch an.

### Beispiel 4

### Zisternenbehandlung

Eine Zisterne mit einem Inhalt von 1000 1 für Brauchwasser wurde mit 100 ml einer Lösung von 5 g Citronensäure, 2g Na-Benzoat, 0,2 g Sorbinsäure und 0,05 g AgNO3 in 100 ml Wasser versetzt. Es zeigte sich eine geringere Neigung zu Verkeimung. Gerade bei Brauchwassertanks, die häufig nicht hygienisch vollständiges Wasser enthalten, ist es wesentlich, diese regelmäßig gegen Verkeimung zu behandeln, sodaß keine gesundheitsgefährdenden Keime wachsen konnen.

### Beispiel 5

### Verkeimungs-Versuch

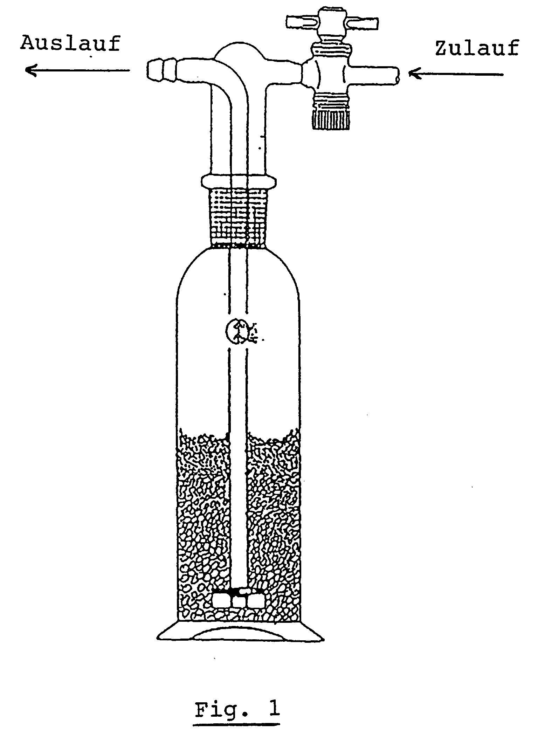

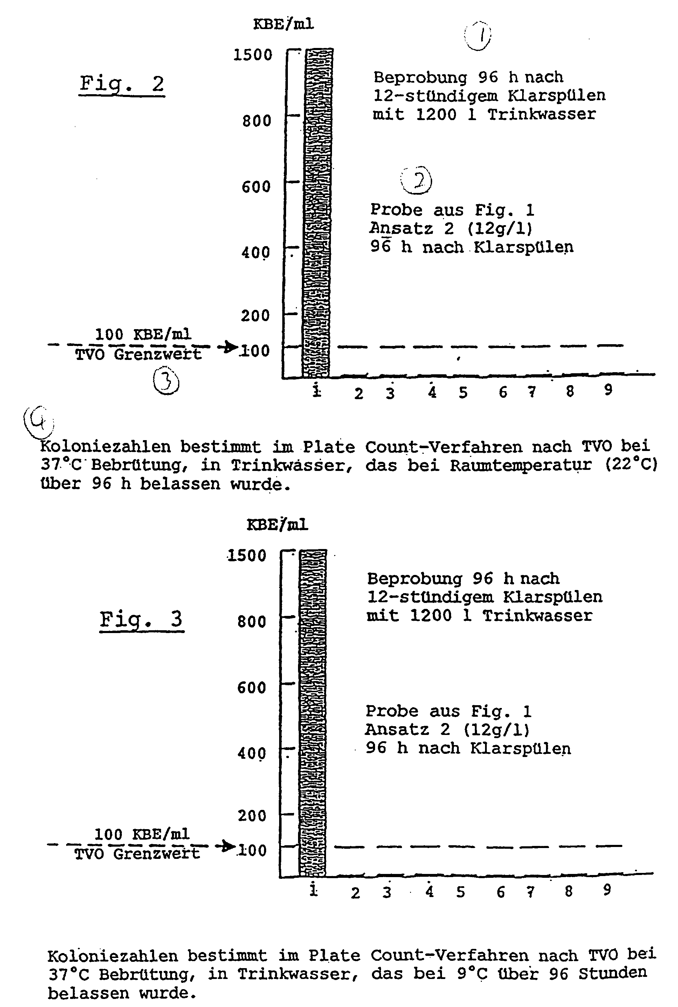

In der in Fig. 1 dargestellten Versuchsanordnung wurde in einer 1-1-Flasche Filterkies mit einem Durchmesser von 0.2 bis 5 mm aus einem Brunnen mit echtem Brunnenbelag über 24 Std. mit der Lösung gemäß nachfolgender Zusammensetzung stehengelassen.

Eingesetzte Zusammensetzung:
99,85 g Citronensäure
0,2 g Silbernitrat

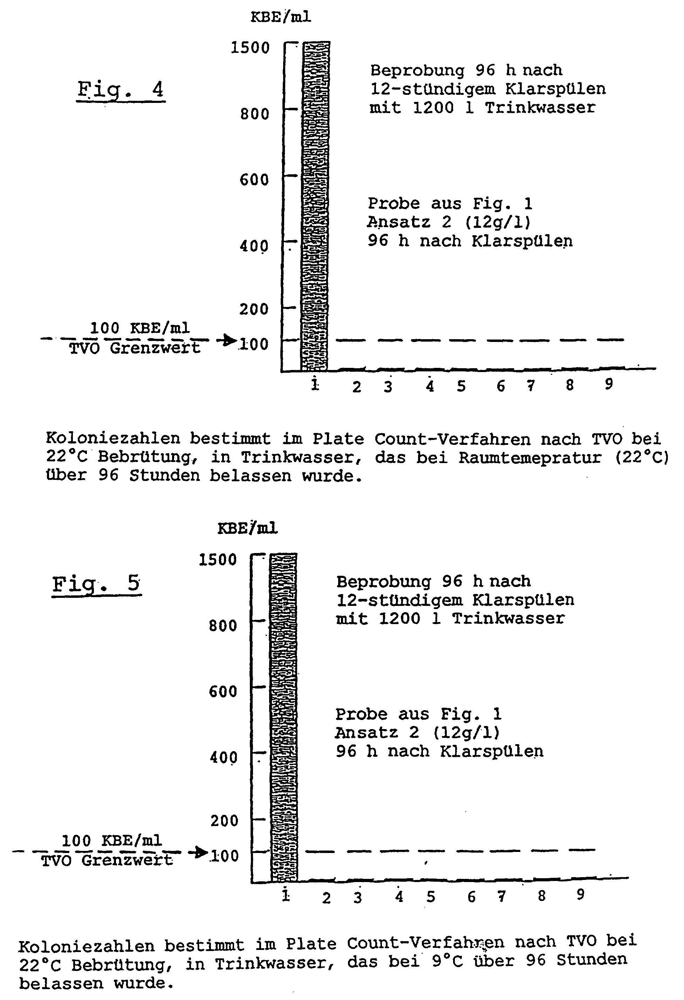

Die auf dem Brunnenbelag stehende Lösung mit Reinigerzusammensetzung wurde in regelmäßigen Abständen auf Keime untersucht. Die Ergebnisse der Koloniezahlen nach dem Plate-Count-Verfahren nach TVO (dtsch. Trinkwasserverordnung) bei 37°C und 22°C -Bebrütung in Trinkwasser, das bei 22°C über 48, 72 und 96 Std. stehengelassen wurde, sind in Fig. 2 - 13 dargestellt. Dabei bedeuten die auf der y-Achse aufgetragenen Werte das folgende:

| | |
|---|---|
| 1 | Nullkontrolle (Leitungswasser aus einem wenig frequentierten Leitungsendstrang, das naturgemäß eine Keimzahldichte von über 1000 KBE/ml aufweist, kein Reiniger) |
| 2 | 12 g/l |
| 3 | 1,2 g/l |
| 4 | 0,12 g/l |
| 5 | 0,012 g/l |
| 6 | 0,0012 g/l |
| 7 | 0,00012 g/l |
| 8 | 0,000012 g/l |
| 9 | 0,0000012g/l |

Daraus ergibt sich, daß obige Zusammensetzung bereits in einer Konzentration mit 0,0000012 g/l das Koloniewachstum hindert.

Eine Auswertung des Versuchs im zeitlichen Verlauf zeigte:

**Tabelle III**

| Probenkonzentration KBE*/ml (nach Bebrütung bei 22°C) *KBE = Koloniebildende Einheiten/ml gem. TVO | | | |
|---|---|---|---|
| | 48 h | 72 h | 96 h |
| 1 | 1100 | 3900 | + 4000 |
| 2 | - | - | - |
| 3 | - | - | - |
| 4 | - | - | - |
| 5 | - | - | - |
| 6 | - | - | - |
| 7 | - | - | - |
| 8 | - | - | - |
| 9 | - | - | - |
| 10 | - | - | - |
| KBE= Koloniebildende Einheiten | | | |

Aus obigem Versuchsergebnis ist ersichtlich, daß Keimwachstum in der nicht behandelten Nullprobe über die Zeit stattfand, während mit erfindungsgenäßem Mittel - auch mit so geringen Konzentrationem wie die Zusammensetzung 9 - behandeltes Wasser auch über 96h kein Keimwachstum aufwies. Daraus ist die Langzeitwirksamkeit des Mittels - auch in geringen Konzentrationen - ersichtlich (s. insbes. Fig. 2 - 5 ).

### Beispiel 6:

### Überwachung des Keimwachstums nach Rückstandsbeseitigung

Um das Abpumpen/Klarpumpen eines Brunnens zu simulieren, wurde nach Stehenlassen des Filterkieses mit der erfindungsgemäßen Reinigungslösung gemäß obiger Zusammensetzung des Beispiels 1 durch Durchströmenlassen von 1200 1 frischem Leitungswasser über 12 Std. durch die in Fig. 1 gezeigte Versuchsanordnung, bei der die Flasche mit Filterkies ein Volumen von ca 11 aufweist, das Klarpumpen eines Brunnens simuliert, dann eine Probe des danach überstehenden Leitungswassers genommen und bakteriologisch untersucht.

Dabei zeigt sich, daß die Blindprobe eine höhere Keimzahl aufweist, während die Proben 2 bis 9 ohne Befund blieben. Gegenüber den Wiederverkeimungen mit der Nullprobe zeigte sich überraschenderweise keine Wiederverkeimung. Dies bedeutet, daß der erfindungsgemäße Reiniger auch nach Abpumpen mikrobiologisch erfreuliche Resultate liefert.

### Beispiel 7

### Pflege von Hydrokulturen

Bei der Hydro- bzw. Aquakultur und auch bei der Pflanzenanzucht wird häufig das Wachstum von Pilzen und anderen Mikroorganismen, die die Pflanzen oder in Aquakultur befindlichen Organismen, wie Fische, Muscheln od. dgl. schädigen, beobachtet. Es konnte festgestellt werden, daß bei Zugabe des erfindungsgemäßen Reinigers mit 0,5 - 5g Citronensäure und 0,05 g AgNO₃ als Zusatz pro 1 1 Wasser (Hydrokulturlösung) das Keimwachstum von Pilzen ohne Beeinträchtigung des Pflanzenwachstums vermieden werden konnte und dadurch erheblich weniger Ausfälle in der Kultur auftraten. Die gleiche Wirkung wurde auch als Zusatz zum Gießwasser zur Verhinderung des Verschimmelns/Verkeimens von Erde beobachtet.

Weitere Ausgestaltungen und Fortentwicklungen sind im Rahmen des Schutzumfangs der Ansprüche dem Fachmann offensichtlich und der Schutzumfang ist keineswegs auf die hier beispielhaft aufgeführten Ausführungsformen begrenzt, die lediglich zur Erläuterung dienen sollen.

## Patentansprüche

1. Reiniger für Trinkwasseranlagen, die Ablagerungen wie Kalk, Fett, Eisen oder manganhaltige Verockerungen aufweisen, mit einem Gehalt an Zitronensäure, **dadurch gekennzeichnet, daß** der Reiniger in einer Packung in fester Form eine Kombination von Zitronensäure und mindestens einem wasserlöslichen Silbersalz nämlich AgNO₃ sowie ggf. mindestens einen Lebensmittelkonservierungsstoff und ggf. ein Tensid in einer Packung aufweist.

2. Reiniger nach Anspruch 1, **dadurch gekennzeichnet, daß** der Lebensmittelkonservierungsstoff ausgewählt ist aus der Gruppe bestehend aus Sorbinsäure, Benzoesäure, p-Hydroxybenzoesäure, Ameisensäure und Propionsäure sowie deren Abkömmlingen, eingeschlossen Salze und Ester derselben.

3. Reiniger nach einem der vorangehenden Ansprüche, **dadurch gekennzeichnet, daß** das Tensid ausgewählt ist aus der Gruppe bestehend aus in der verwendeten Menge untoxischen anionischen und nichtionischen Tensiden, Seifen, Fettsäure-Aminocarbonsäurekondensate, Alkylbenzolsulfonate, Ligninsulfonate, Alkylsulfonate, Fettsäureestern, sulfatierten Fettsäureglyceriden, Betaine, Sulfobetaine, Saponine, Fettsäureester von Polyalkoholen, Oxyethylierten Fettsäuren, Natriumdodecylsulfonat oder Natriumlaurylsulfat.

4. Reiniger nach einem der Ansprüche 1 bis 4, **dadurch gekennzeichnet, daß** der Reiniger zusätzlich ein oder mehrere von Materialien ausgewählt aus der Gruppe bestehend von lebensmittelrechtlich unbedenklichen Stabilisatoren, Trocknungsmittel, Säuerungsmittel, Korrosionsinhibitoren, Emulgatoren und/oder Sprengmittel enthält.

5. Reiniger nach einem der vorangehenden Ansprüche 1 bis 6, **dadurch gekennzeichnet, daß** er einen Gehalt an MgCl₂ aufweist.

6. Reiniger nach einem der vorangehenden Ansprüche, **dadurch gekennzeichnet, daß** die Lösung des Reinigers in Wasser einen sauren pH-Wert, bevorzugt zwischen etwa 2 und etwa 6, aufweist.

7. Reiniger nach einem der vorangehenden Ansprüche, **dadurch gekennzeichnet, daß** er zwischen 68,97 und 99,8 Gew.% Zitronensäure, 9,09 und 0,2 Gew.% Silbernitrat aufweist.

8. Reiniger nach einem der vorangehenden Ansprüche, **dadurch gekennzeichnet, daß** er. 0,3 bis 10 Gew.%, bevorzugt 0,3 bis 1 Gew.% mindestens eines Lebensmittelkonservierungsstoffes aufweist.

9. Reiniger nach einem der vorangehenden Ansprüche, **dadurch gekennzeichnet, daß** er mindestens ein Tensid in einer Menge zwischen 1 und 4 Gew.% aufweist.

10. Verfahren zum Reinigen von Trinkwasseranlagen, **dadurch gekennzeichnet, daß** eine Reinigungslösung aus dem Reiniger nach einem der vorangehenden Ansprüche in Wasser in die Trinkwasseranlage oder den Brunnen eingebracht und nach einer Einwirkzeit daraus entfernt wird.

11. Verfahren nach Anspruch 9, **gekennzeichnet durch** Einbringen des Reinigers nach einem der vorangehenden Ansprüche in trockener Form oder in konzentrierter wässriger Lösung mit einem Gehalt an etwa 6 - 15g Reiniger / 1000 g Wasser oder etwa 0,5 - 10 Teile Reiniger auf 100 Teile Wasser, Einwirkenlassen desselben und Abpumpen der im Aquifer befindlichen Lösung.

12. Verwendung des Mittels nach einem der Ansprüche 1 bis 9 zur Reinigung und Pflege von wasserführenden Anlagen wie Schwimmbädern und Teichen, eingeschlossen Fischteichen und anderen Naturteichen, künstlichen und natürlichen Brunnen, Wasserleitungssystemen, wie Wasserleitungsanlagen, Heizanlagen, Klimaanlagen, Brauchwasseranlagen; zur Behandlung von wasserhaltigen Materialien, wie von Abfüllen zur Abfallhygiene und zur Entkalkung von wasserführenden Systemen, wie Küchengeräten, wie Kaffeemaschinen, Heißwassergeräte.

## Claims

1. Cleaner for drinking water plants which have deposits such as lime, grease, iron or manganese-containing encrustations, having a content of citric acid, **characterized in that** the cleaner has, in a pack, in solid form a combination of citric acid and at least one water-soluble silver salt, namely AgNO₃, and optionally at least one food preservative and optionally a surfactant in a pack.

2. Cleaner according to Claim 1, **characterized in that** the food preservative is chosen from the group consisting of sorbic acid, benzoic acid, p-hydroxybenzoic acid, formic acid and propionic acid, and derivatives thereof, including salts and esters thereof.

3. Cleaner according to one of the preceding claims, **characterized in that** the surfactant is chosen from the group consisting of - in the amount used - nontoxic anionic and nonionic surfactants, soaps, fatty acid-aminocarboxylic acid condensates, alkylbenzenesulphonates, lignosulphonates, alkylsulphonates, fatty acid esters, sulphated fatty acid glycerides, betaines, sulphobetaines, saponins, fatty acid esters of polyalcohols, oxyethylated fatty acids, sodium dodecylsulphonate or sodium lauryl sulphate.

4. Cleaner according to one of Claims 1 to 4, **characterized in that** the cleaner additionally comprises one or more materials chosen from the group consisting of stabilizers, drying agents, acidifiers, corrosion inhibitors, emulsifiers and/or disintegrants which are acceptable under food legislation.

5. Cleaner according to one of the preceding Claims 1 to 6, **characterized in that** it has a content of MgCl₂.

6. Cleaner according to one of the preceding claims, **characterized in that** the solution of the cleaner in water has an acidic pH, preferably between about 2 and about 6.

7. Cleaner according to one of the preceding claims, **characterized in that** it has between 68.97 and 99.8% by weight of citric acid, 9.09 and 0.2% by weight of silver nitrate.

8. Cleaner according to one of the preceding claims, **characterized in that** it has 0.3 to 10% by weight, preferably 0.3 to 1% by weight, of at least one food preservative.

9. Cleaner according to one of the preceding claims, **characterized in that** it has at least one surfactant in an amount between 1 and 4% by weight.

10. Process for cleaning drinking water plants, **characterized in that** a cleaning solution of the cleaner according to one of the preceding claims in water is introduced into the drinking water plant or the well and, after a contact time, removed therefrom.

11. Process according to Claim 9, **characterized by** introducing the cleaner according to one of the preceding claims in dry form or in concentrated aqueous solution with a content of about 6 - 15 g of cleaner/1000 g of water or about 0.5 - 10 parts of cleaner per 100 parts of water, allowing it to take effect and pumping off the solution present in the aquifer.

12. Use of the composition according to one of Claims 1 to 9 for the cleaning and care of water-bearing installations, such as swimming pools and ponds, including fish ponds and other natural ponds, man-made and natural wells, water conduit systems, such as water conduit plants, heating installations, air conditioning systems, industrial water plants; for the treatment of water-containing materials, such as of waste materials for waste hygiene and for descaling water-bearing systems, such as kitchen appliances, such as coffee machines, water heaters.

## Revendications

1. Produit de nettoyage pour installations d'eau potable qui présentent des dépôts tels que de calcaire, matière grasse, fer ou des incrustations contenant du manganèse, ayant une teneur en acide citrique, **caractérisé en ce que** le produit de nettoyage comporte dans un emballage sous forme solide une association d'acide citrique et d'au moins un sel d'argent soluble dans l'eau, à savoir AgNO₃, ainsi qu'éventuellement au moins un conservateur pour produits alimentaires et éventuellement un tensioactif.

2. Produit de nettoyage selon la revendication 1, **caractérisé en ce que** le conservateur pour produits alimentaires est choisi dans le groupe constitué par l'acide sorbique, l'acide benzoïque, l'acide p-hydroxybenzoïque, l'acide formique et l'acide propionique, ainsi que leurs dérivés, y compris leurs sels et esters.

3. Produit de nettoyage selon l'une quelconque des revendications précédentes, **caractérisé en ce que** le tensioactif est choisi dans le groupe constitué par les tensioactifs anioniques et non ioniques, savons, produits de condensation d'acides gras et d'acides aminocarboxyliques, alkylbenzènesulfonates, ligninesulfonates, alkylsulfonates, esters d'acides gras, glycérides d'acides gras sulfatés, bétaïnes, sulfobétaïnes, saponines, esters d'acides gras avec des polyols, acides gras oxyéthylés, le dodécylsulfonate de sodium ou le laurylsulfate de sodium, non toxiques en la quantité utilisée.

4. Produit de nettoyage selon l'une quelconque des revendications 1 à 3, **caractérisé en ce que** le produit de nettoyage contient en outre un ou plusieurs des substances choisies dans le groupe constitué par des stabilisants, desséchants, acidifiants, inhibiteurs de corrosion, émulsifiants et/ou désintégrants, sans inconvénients selon la législation visant les denrées alimentaires.

5. Produit de nettoyage selon l'une quelconque des revendications précédentes 1 à 4, **caractérisé en ce qu'**il présente un teneur en MgCl₂.

6. Produit de nettoyage selon l'une quelconque des revendications précédentes, **caractérisé en ce que** la solution du produit de nettoyage dans l'eau présente un pH acide, de préférence entre environ 2 et environ 6.

7. Produit de nettoyage selon l'une quelconque des revendications précédentes, **caractérisé en ce qu'**il comporte entre 68,97 et 99,8 % en poids d'acide citrique et entre 9,09 et 0,2 % en poids de nitrate d'argent.

8. Produit de nettoyage selon l'une quelconque des revendications précédentes, **caractérisé en ce qu'**il comporte de 0,3 à 10 % en poids, de préférence, de 0,3 à 1 % en poids, d'au moins un conservateur pour produits alimentaires.

9. Produit de nettoyage selon l'une quelconque des revendications précédentes, **caractérisé en ce qu'**il comporte au moins un tensioactif en une quantité comprise entre 1 et 4 % en poids.

10. Procédé pour le nettoyage d'installations d'eau potable, **caractérisé en ce qu'**on introduit dans l'eau présente dans l'installation d'eau potable ou les puits une solution de nettoyage à base du produit de nettoyage selon une ou plusieurs des revendications précédentes et, après un temps d'action, on l'en retire.

11. Procédé selon la revendication 9, **caractérisé par** l'introduction du produit de nettoyage selon l'une quelconque des revendications précédentes, sous forme sèche ou en solution aqueuse concentrée ayant une teneur d'environ 6-15 g en produit de nettoyage/1 000 g d'eau ou d'environ 0,5-10 parties de produit de nettoyage pour 100 parties d'eau, le fait de le laisser agir et l'élimination par pompage de la solution se trouvant dans le système aquifère.

12. Utilisation du produit selon l'une quelconque des revendications 1 à 9, pour le nettoyage et l'entretien d'installations aquifères, telles que des piscines et des bassins, y compris des viviers et d'autres bassins naturels, des puits naturels et artificiels, des systèmes de canalisation d'eau, tels que des installations de conduites d'eau, des installations de chauffage, des installations de climatisation, des installations d'eau industrielle ; pour le traitement de matériaux contenant de l'eau, tels que des unités de mise en bouteille, pour l'hygiène des déchets et pour le détartrage de systèmes aquifères, comme des appareils de cuisine, tels que des machines à café, et des appareils de chauffage de l'eau.
